# EUROPEAN PATENT APPLICATION

(11) **EP 2 149 847 A1**
(43) Date of publication of application: **03.02.2010**
(21) Application number: 09250075.0
(22) Date of filing: 12.01.2009
(51) Int. Cl.: G06F 17/30

(54) **Systems, methods, and media for sharing and processing digital media content in a scaleable distributed computing environment**

(30) Priority: 28.07.2008 US 84048 P; 26.11.2008 US 324028
(71) Applicant: SonicSwap Inc., Palo Alto, CA 94301 (US)
(72) Inventor: Brant, Kelly M., Palo Alto, CA 94301 (US); Skilken, Daniel, Monte Sereno, CA 95030 (US)
(74) Representative: Townsend, Victoria Jayne

(57) **Abstract**

A distributed workload media processing system including: a storage server (132) storing playlists, including a substantially permanent origin identifier identifying a remote device (120), the storage server programmed to store the plurality of playlists in a plurality of formats; and a network server (131) in communication with the storage server (132) and in communication with remote user devices (110, 120), the network server (131) programmed to add a references to the plurality of playlists stored in the storage server (132) identifying any remote devices sharing a playlist and, when a change occurs to a particular playlist, send an indication of the change to any remote devices (110, 120) identified as sharing the particular playlist; the network server (131) further programmed to receive requests requiring processing from the remote user devices (110, 120) and to transfer at least part of processing of the requests to the remote user devices (110, 120) instead of performing the at least transferred part of the processing on the network server (130).

## Description

### Cross-reference to Related Application

This application claims the benefit under 35 U.S.C. §119(e) of United States Provisional Patent Application No. 61/084,048, filed July 28, 2008, which is hereby expressly incorporated by reference herein in its entirety.

### Technical Field

The disclosed subject matter relates to systems, methods, and media for sharing and processing digital media content in a scaleable distributed computing environment.

### Background

Music and other media, including but not limited to video in digital format, are often grouped together in media collections. This gives individuals and organizations a way to manage their media content collections. The creation of a playlist is a popular method of organizing multiple songs or other content into groups on a content player. After creation, a playlist can be accessed and the content can be played or otherwise executed by a content player. Access to content may be in a specified order or a random order depending on the user preferences.

Playlists may also be shared among users of the same digital content so that one user may use another user's playlist. One way a playlist may be shared is by posting it on the Internet so that it is available for download to another user's content player, or sending it to another user as an attachment in an email.

Social networks of connected users on the Internet have become quite large, often encompassing hundreds of millions of users. Each of those users may show interest in sharing digital media playlist information or information about the digital media that they like, listen to, or view with friends and connections in these social networks. This potentially large number of social network members compounds the problems of storing and manipulating the collective data of a large body of digital media playlists in a manner that can scale as the user base grows.

Playlists contain various meta-data that describe the contents and collection of media in the playlists. These include, for example, but are not limited to: the track name, artist name, album name, play count, last date played, ratings, video name, and references to external media sources that are connected to or referenced in the playlist. The number of elements in a playlist and the collection of meta-data referenced in the playlist can be quite large and complex. A single user of a playlist sharing system can have a large number of playlists and each playlist can contain a large volume of data. Each new user can present an enormous amount of data to manage, analyze, and store. When these users collect together in an on-line social network the playlist data sets become so large that they can become difficult to manage in a centralized database.

### Summary

Systems, methods, and media for sharing and processing digital media content in a scaleable distributed computing environment are provided. In some embodiments, a distributed workload media processing system is provided, the system including: a storage server storing playlists, each playlist including references to media files and including a substantially permanent origin identifier identifying a remote device, the storage server programmed to store the plurality ofplaylists in a plurality of formats; and a network server in communication with the storage server and in communication with a plurality of remote user devices, the network server programmed to add a references to the plurality of playlists stored in the storage server identifying any remote devices sharing a playlist and, when a change occurs to a particular playlist, send an indication of the change to any remote devices identified as sharing the particular playlist; wherein the network server further programmed to receive requests requiring processing from the plurality of remote user devices and to transfer at least part of processing of the requests to the plurality of remote user devices instead of performing the at least transferred part of the processing on the network server.

In some embodiments, a method for sharing playlists among a plurality of user devices in communication with a media server is provided, the method including: receiving a first playlist including a first origin identifier identifying a first user device at a remote media server; receiving an indication that the first playlist is shared with a second user device at the remote media server; receiving information describing changes to the first playlist from the first user device at the remote media server; communicating to the second device that the first playlist has been changed, based on the received information; receiving a second playlist including a second origin identifier identifying the second user device at the remote media server; receiving a request to analyze the first playlist from the first user device at the remote media server; transferring the analysis of the first playlist to the first user device including sending the second playlist from the remote media server to the first user device for comparison with the first playlist; and receiving results of the analysis from the first device at the remote media server.

In some embodiments, a method for sharing and updating playlists is provided, the method including creating a first playlist including a substantially permanent origin identifier on a first user device; uploading the first playlist to a remote media server; sharing the first playlist with a remote user device; changing the first playlist on the first device; and uploading information describing the changes to the remote server; receiving a second playlist created by the remote user device from the remote media server at the first device in response to a user request to perform analysis based at least in part on the first playlist and remote playlists stored in the remote media server; comparing the first playlist and the second playlist at the first device in response to the request to perform analysis; and sending results based on the comparing to the media server.

### Brief Description of the Drawings

FIG. 1 is a detailed example of servers and clients that can be used in accordance with some embodiments of the disclosed subject matter.

FIG. 2 is a schematic diagram of a system suitable for sharing and processing digital media content in a scaleable distributed computing environment in accordance with some embodiments of the disclosed subject matter.

FIG. 3 is an illustration of nodes that can be used in FIG. 2 in accordance with some embodiments of the disclosed subject matter.

### Detailed Description

Systems, methods, and media for distributing the processing, storage, and distribution of playlists in a shared playlist system that is scalable to a large number of users is provided. In some embodiments, modifying an original playlist stored on a first device can automatically modify copies of that playlist stored on various other devices. Relationships between various copies of a playlist can be maintained and determined, for example, by creating and storing connections between copies of a playlist stored in, or pointed to, by user devices and a media server. As users update their playlists by, for example, changing the media content, ratings, meta data, or playlist name in their local player, the changes can be transferred to other devices by accessing the media server to determine what devices are sharing what playlists. Redistribution of the playlists to, for example, local web browsers, software applications or media players can be served from distribution points in various pre-translated formats that can be specific to the local player or display device.

Systems, methods, and media can distribute the pre-processing of tracks collections to the client level, and reduce the amount of information that must be stored by a media server. For example, comparison of different users' digital media collections can be distributed to various client devices instead of being performed by a media server. Searches for related commercially released media and other available media sources as well as the comparison of digital media a collections between users can be done at the client level to further reduce the computing impact on a media server.

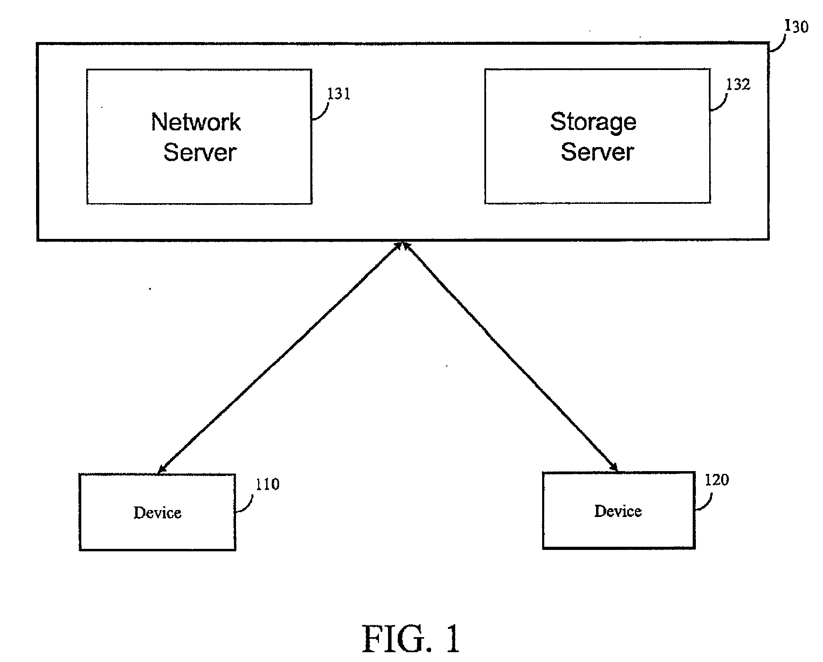

FIG. 1 illustrates a network including a first device 110 and a second device 120 both in communication with a media server 130. Media server 130 includes a network server 131 and one or more storage servers 132. Network server 131 can process playlists stored on storage servers 132 and played by devices 110 and 120. For example, network server 131 can analyze media usage of devices 110 and 120, compare various playlists stored on storage servers 132, and translate playlists between various formats. Playlists can be stored in storage server 132 in those various formats and can be stored with a permanent reference to the device and/or user that created a particular playlist or with a reference to users and/or devices sharing the playlists. Playlists can be communicated between a device and server 132 either directly or through server 131. Devices 110 and 120 can perform various functions on playlists stored locally and on playlists stored in storage servers 132. For example, devices 110 and 120 can compare playlists that it has created with playlists of other devices or playlist created by an administrator of server 130, analyze changes made to playlists, analyze tastes and trends other devices and/or users, and display, manipulate, and compare playlists with a graphical interface. Devices 110 and 120 can also play content referenced in playlists.
In some embodiments playlists are stored locally on devices 110 and 120 and are also stored on media server 130 where they can be accessed by devices 110 and 120. For example, devices 110 and 120 can each store zero or more playlists and media server 130 can store the aggregate of all playlists on all devices (e.g., devices 110, 120, and other similar devices). If, for example, device 110 or device 120 store zero playlists, such a device can access playlists from server 130. Media itself can be stored on either or both of media server 130, devices 110 and 120, and third party systems. For example, in some embodiments, devices 110 and 120 can store zero or more media items (e.g., songs) and media server 130 can store only metadata. Media server 130 can also communicate with and link to media (using the metadata) stored on other systems (e.g., YouTube ©). Devices 110 and 120 can get metadata from media server 130 and use that metadata to get media items from other server 130-like third party servers (e.g., by accessing http://www.youtube.com).

### Localized System Processing

Some embodiments include software integrated into a local media player or a separate program that is integrated with a media player on device 110. This software program analyzes the local database or records of the local media player to find media accessed by the player. It can analyze and identify media against catalogs (e.g., online catalogs and retail media catalogs) and/or a centralized database to positively identify artists, tracks, albums, movies, and can store unique identifiers that can be used to compare these tracks to other members' collections. It can use similar analysis to find available media connections on third party and proprietary systems that associate the media with other private and public media catalogs that facilitate performance, viewing, or listening to the playlist in other media players, or displaying the playlist in additional formats. Some embodiments look for changes in a media collection to record, for example, using an RSS news feed of updates to users' media collections, changes to their playlists, their favorite top artists and genres, and track trends of usage on a time period basis (e.g., weekly, monthly, quarterly, etc.). The content and use of playlists can be monitored and analyzed from the RSS feed, and the top artists and genres that a user has recently been listening to as well as their favorite media in the collection can be determined. This analysis can be used to assemble playlists and these playlists can be uploaded to server 130. Friends of the user (using various devices 110 or 120) can subscribe to RSS news feeds of other users.

Some embodiments can include software that can run, for example, on the user's device that can compile data about the music collection, and can integrate this data with a list of the media. This compiled data can be transmitted or posted to another device via, for example, the Internet, wirelessly, by modem or through direct connection. The transmission can use various formats for the data in the file and can be compressed to save data transmission time. The localized computer or media device can perform analysis of member tastes, contents of the library, and trends in the use of media. When a new member joins the user network to participate in playlist or media data sharing, he can bring with him a new media player or computer that is capable of performing this analysis, thus making the system scalable as users join the network.

In some embodiments, a local client running on a device can be written in, for example, Objective C++ on a Windows, Macintosh, or Unix system. This local client code can interact with the local player using an application-programming interface to analyze the playlist and media database of the player. The software can store statistics about the use of media and the media contents in a separate database, including some unique identifiers for each playlist and media track in the system. A unique identifier can also be used to identify the installation of the local player or client software that is tracking the playlists. The client can gather track, artist, album, or video information. It can systematically poll outside sources using URL calls to search for the tracks or video in a centralized database for a unique key for each track. In addition, it can search various retail catalogs for the music or video. If the media is found, it can store the information in a local application database associated with the appropriate item.

Periodically, the local client software can combine the information in a local database, such as, for example, an SQL database, with fmedia catalogs of the local player, and can send the combined information up to centralized servers for processing. This can be done in a data file formatted in XML and compressed before being sent to server 130 using a put or post operation (e.g., HTTP PUT or POST operations). Each playlist, track, artist, and video can be uniquely identified in the information streamed up to the server. Before each transmission, the client software can re-search the central databases, and the various retail catalogs to see if any media that was added by the user or previously un-identified, can now be identified prior to sending an update.

The client software can periodically scan the media library to find changed playlists, media playcount, ratings, and new media acquisitions. This information can also be stored in the database and dated. The statistics can be gathered together to determine top artists, top genres, and build news feeds about albums added to the local player, playlists added or updated, and what the top artists and genres are for the user. These statistics can be maintained for various time periods, for example one week, one month, and the last 90 days. The statistics, and news feed can also be transmitted to the centralized server in a data file format such as an XML format using a put or post operation to the central server. These statistics can be used in a social internet setting to display a member's top artists, or what is new in their music tastes and media habits.

Polling central servers, and retail databases, and gathering statistics can take a large amount of time, bandwidth, and processing. One advantage of processing this on the local client's device, with their local media player, is that it can be done in the background with little or no effect on the client device or media player usage. Over time the data can be gathered and submitted to the server 130. This can offload the burden of analysis to the client devices. When a new user signs up for the service, they bring a new device to the system to provide additional resources for processing.

### Centralized Parsing and Processing

In some embodiments, after media server 130 receives a transmission of the collection of playlists from device 110, network server 131 can parse and analyze data contained in the transmission. The transmission can be in various formats, for example, it can be split into separate playlists represented in the transmission. Parsed playlists can also be translated into a variety of different proprietary or standard formats to support different media players or device specific formats. Playlists can be cataloged in storage server 132 to associate them with an original playlist as it was represented on the user's device. In some embodiments, these catalogs can be associated with the user.

Connections between various copies of a playlist stored on various devices can be maintained and determined using a reference to, for example, a serial number or unique identifier for each device or playlist connection and each playlist. For example, the reference to the original playlist can be maintained so if the playlist is modified on the source player, other players that also reference that source playlist can also have the playlist that they are using updated. The original reference or connection to the original playlist can be maintained through processing updates the playlist. For example, an original source playlist can be generated using various applications, such as, for example, iTunes®. This playlist can refer to songs the user owns and has put on various other devices like a home stereo system or, for example, a Sonos® player, available from http://www.sonos.com. In addition, this user can post the playlist on their blog or on a social network such as, for example, mySpace.com. These other devices can download an XML file that is tied to the original source playlist by a database listing. If the playlist is modified on, for example, iTunes, then the playlist on the Sonos player, and/or the playlists posted on the blog can also be automatically modified. This can provide benefits to the user, for example, when they are using dynamic playlists to represent their recently played media, or their favorite media and want these reflected on all players that use the playlist.

In some embodiments, centralized parsing and processing can gather consolidated statistics about media usage. For example, play count of individual media, favorites, ratings, and what people are viewing or listening to, and general taste trends can be gathered during playlist processing. Data that was not collected by the client software and media matching can still be generated by this centralized processor prior to parsing and referencing the individual playlists. The processing can be performed, for example, during parsing, or off loaded onto other servers to be performed off line, for example, at a later time. Statistics and taste analysis can be stored in files in a variety of formats that, for example, can be used to compare users, display a user's favorites, or subset the user's media collection. These files can be cataloged and identified by data and user collection, and tagged with the original media player's identification so they can be maintained and updated whenever the latest data is uploaded from a player.

When network server 131, running, for example, any typical.web server software, such as, for example, Apache, Tomcat, Java, and mySQL, receives an update from a user, it can check to see if the user has any playlists currently listed in the database. If there are no playlists in the system, it can systematically parse the file and pull the unique identifier for each playlist from the data feed. These references can be stored in a database (e.g., on storage server 132) and associated with the user's original media player installation. Each playlist can be written to a separate file in various data formats that can be used later to play or display the playlist on various other players or on the same player that the playlist originated. If the user has previously processed playlists in the system, the centralized server can pull the list of playlists from the database and can compare each playlist that comes from the client software with the listing. New playlists can be added to the database. Playlists that were deleted can be removed. Playlists that are updated or changed can be marked as such.

During parsing and storing of the playlists, generalized statistics can be gathered from the playlists as they are submitted to develop community level analysis of media taste preferences or media format preference. Total play count of the individual media and ratings can be gathered and analyzed. Statistics can be gathered to determine the popularity of an artist, a genre or a specific media item and tied to the general geographic location of these media preferences.

### Centralized Storage and Distribution

In some embodiments, after processing and parsing the data into individual playlists in a variety of industry standard or proprietary formats, the playlist files can be store on storage servers 132 in a variety of file formats. A format can be selected, for example, based on the size of its files to, for example, increase download speed. A reference to the necessary file or files or an Internet address to the playlist or group of playlists can be received from a centralized database for a specific media player. Connections between media players that reference shared playlists can be maintained in the database. In some embodiments, only the references to the media files are stored in the database to reduce the amount of data stored and drawn from a database processor.

Playlists can be stored and served from, for example, a centralized server. In some embodiments, methods and systems can be set up to serve the playlists from various locations around the world to reduce the transmission time of the playlist files. Multiple file formats can be stored and can be referenced for individual media players that need or prefer certain formats. Access to the store playlists can be secured so that, for example, only authorized media players can have access to the data. Addresses to media referenced in the playlists can be supplied in the playlists or in other reference files to give authorized media players the ability to play the media.

The reference location of each file can be stored in the database so that it can be looked up and downloaded directly from the file server. Playlists contain a large amount of data that may be difficult to retrieve from a database. Retrieving the pointer to the data file stored in the server can be fast, and the data retrieval time can be faster in the flat file format. A permanent link can be maintained between all the original playlists on the original media player, and the playlists stored in the system. If the original playlist is modified in any way, the data can be updated in the stored playlist files, but the original pointer to the original playlist can be maintained. Any players that reference these stored files can see the changes to the playlist whenever they reload the data file from the central servers.

### Localized Display and Processing of Playlists

In some embodiments, systems, methods, and media are provided on, for example, device 120 to request playlists from the storage server 132. Access to playlists can be restricted based on methods similar to login authorization or authorization keys.

After downloading playlists, device 120 can perform local analysis or manipulate the playlist as necessary to display, or play all or some of the playlist data. This analysis can include matching the playlist track or video information to third party catalogs as necessary to facilitate the display or playing of the playlist. In some embodiments, methods and systems are provided to load multiple playlists so, for example, playlists can be compared. For example, a playlist can be compared against the library a user's playlists to determine how much of the playlist can be played. Playlists can also be compared, for example, to determine the number of tracks, artists, genres, or videos in common.

In some embodiments, methods and systems are used to compare two playlists to determine how closely they match in terms of artists and genres to determine compatibility to the user's tastes in music or video selections. In some embodiments, methods and systems are provided to generate new file formats or subsets of the playlist for use in other players, or to transmit via email or any other method to another user. The player can have database access to various registered formats of the originally processed and stored playlist, and can deliver alternative links or views into other data formats. Local analysis of the playlist can list track or video contents, details of the artists and genres in the playlist, or subsets of the data.

Various embodiments can be implemented in various languages. For example, remote client media players can be written in C, ActionScript, or Java or JavaScript and can reference the database and centralized file servers to subscribe to playlists. Users who post their own playlist on a blog, or profile page in a social network, or utilize a playlist on a home media player, can have their playlists updated automatically whenever they are changed on the original source media player. The localized player refers to a specific playlist address for the file on the centralized server. This file can be kept up to date by the playlist processing system. This file can be delivered to the player by requesting and downloading the data file in a proprietary or standard playlist format. Included in the file can be references to external media files or catalogs of media files that are stored on a device other than the device being used, and retail catalogs so that the player can have access to the media and links to, for example, play or buy the media. Unique identifiers for the artists, cds, tracks, and video content allow the localized player to analyze and compare playlists. In some embodiments, this data can be used to analyze which tracks a user owns when they are looking at another user's playlist. Some views of the playlist can show a user's top artists and compare these artists with another user to determine the overlap and how compatible are the two users' tastes in music or video. The local player can utilize the text from artists, track names, and albums to do this comparison, and if there are unique identifiers, this comparison can be even easier.

In some embodiments, a localized player can also search for available media or sales links for tracks or media in the playlist. Additional search and analysis can be done at the local level within the player utilizing API interfaces to various other sites. The player can download the playlist, uncompress the data, display, sort and manipulate the data, and compare the data with other playlists in an interactive manner. In some embodiments, rather than analyzing playlist data, or comparing and calculating playlists display data on a centralized server, the analysis process can be performed on the local media player, utilizing the computing resources of the end user, and making the system more scalable.

### Network and Media

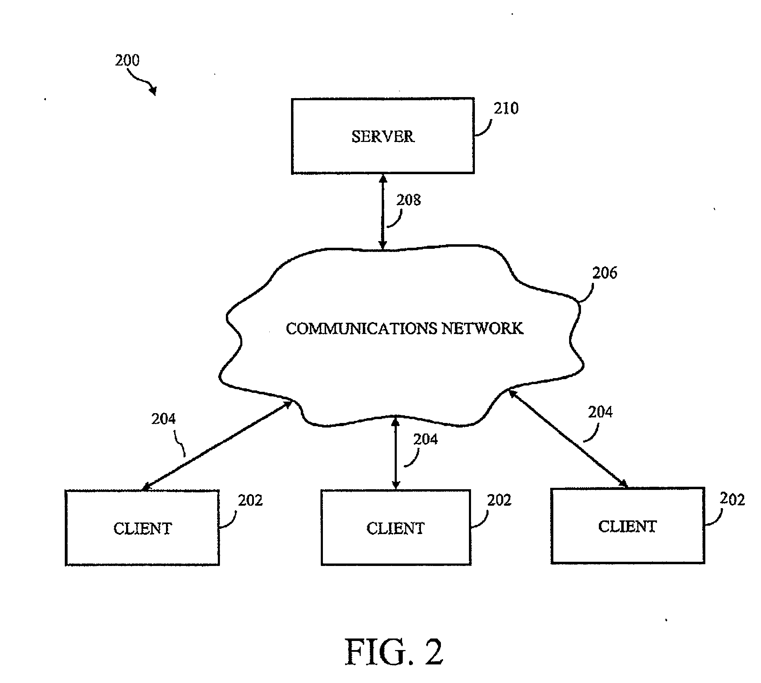

FIG. 2 is a schematic diagram of an illustrative system 200 that can be used with some embodiments. As illustrated, system 200 can include one or more clients 202. Clients 202 can be connected by one or more communications links 204 to a communications network 206 or connected directly to each other. Communications network 206 can also be linked through a communications link 208 to a server 210. Various embodiments of the disclosed subject matter can be implemented on at least one of the server and the clients. It is also possible that a client and a server can be connected through communication links 208 or 204 directly and not through a communication network 206.

In system 200, server 210 can be any suitable server or digital processing device for executing an application, such as, for example, a processor, a computer, a data processing device, or a combination of such devices. Communications network 206 can be various networks including the Internet, an intranet, a wide-area network (WAN), a local-area network (LAN), a wireless network, a frame relay network, an asynchronous transfer mode (ATM) network, a virtual private network (VPN), a mobile ad-hoc network (MANET), etc. or any combination of any of the same. Communications links 204 and 208 can be any communications links suitable for communicating data between clients 202 and server 210, such as network links, dial-up links, wireless links, hard-wired links, etc. Clients 202 can be any suitable digital processing devices, such as, for example, personal computers, laptop computers, mainframe computers, data displays, Internet browsers, personal digital assistants (PDAs), two-way pagers, wireless terminals, portable telephones, etc., or any combination of the same. In some embodiments, clients 202 and server 210 can be located within an organization. Alternatively, clients 202 and server 210 can be distributed between multiple organizations.

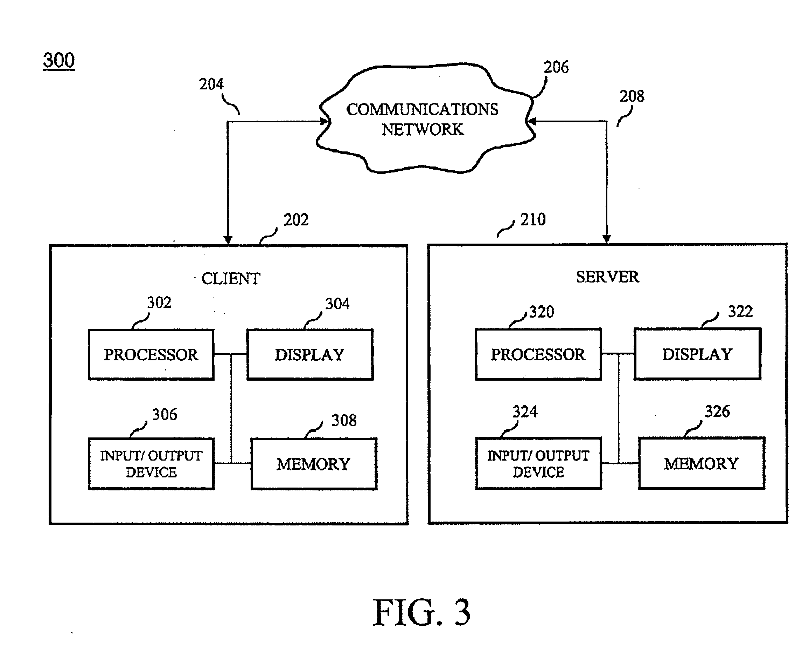

The server 210 and one of the clients 202, which are depicted in FIG. 2, are illustrated in more detail in FIG. 3. Referring to FIG. 3, client 202 and server 210 can include respectively, among other things, processors 302 and 320, displays 304 and 322, input/output devices 306 and 324, and memory 308 and 326, which can be interconnected. The input/output devices can receive input and send output such as, for example, media files, text from keyboard, images from a camera, images from a scanner, voice-to-text translations, etc. In some embodiments, memory 308 and 326 contain a storage device for storing a program for controlling processors 302 and 320 and/or performing methods, for example, those described herein with reference to FIG. 1. In some embodiments, devices 110 and 120 can be implemented on any of clients 204 and media server 130 can implemented on server 210. Variations and combinations of system 300 might be suitable for different embodiments of the disclosed subject matter. In addition, although some embodiments are described herein as being implemented on a client and/or a server, this is only illustrative. Various components of some embodiments of the disclosed subject matter can be implemented on any suitable platform.

Devices 110 and 120 can include devices such as, for example, but not limited to, personal computers, laptop computers, personal digital assistants, mobile phones, portable music players, portable video players, and web servers, such as web servers providing web pages that, for example, allow users to access, share, and play media, often use the same playlist in various devices. Playlists can include lists of digital content, which can include, but are not limited to, music files, video files, and movies, any of which can be in various formats.

Although the invention has been described and illustrated in the foregoing illustrative embodiments, it is understood that the present disclosure has been made only by way of example, and that numerous changes in the details of implementation of the invention can be made without departing from the spirit and scope of the invention, which is limited only by the claims that follow. Features of the disclosed embodiments can be combined and rearranged in various ways within the scope and spirit of the invention. Embodiments of the disclosed subject matter can be combined with embodiments described in U.S. Patent Application No. 11/804,807, filed May 21,2007, which is hereby expressly incorporated by reference herein in its entirety.

## Claims

1. A distributed workload media processing system, comprising:
a storage server (132) storing playlists, each playlist comprising references to media files and including a substantially permanent origin identifier identifying a remote device, the storage server programmed to store the plurality of playlists in a plurality of formats; and
a network server (131) in communication with the storage server (132) and in communication with a plurality of remote user devices (110, 120), the network server programmed to add a references to the plurality of playlists stored in the storage server (132) identifying any remote devices sharing a playlist and, when a change occurs to a particular playlist, send an indication of the change to any remote devices identified as sharing the particular playlist;
**characterized in that** the network server (131) is further programmed to receive requests requiring processing from the plurality of remote user devices (110, 120) and to transfer at least part of processing of the requests to the plurality of remote user devices (110, 120) instead of performing the at least transferred part of the processing on the network server (131).

2. The system of claim 1, **characterised in that** the request is received from a first remote device (120) and requests a comparison of a first playlist to the playlists stored in the storage server (132), wherein the network server (131) is further programmed to send at least some of the playlists stored in the storage server (132) to the first device (120) to perform at least part of the comparison instead of performing the at least part of the comparison on the network server (131).

3. The system of claim 1, **characterized in that** the network server (131) is further programmed to transfer the at least part of the processing based in part on a current workload of the network server (131).

4. The system of claim 2, **characterized in that** the higher the workload of the network server (131) the more processing it transfers to the plurality of remote user devices (110, 120),

5. The system of claim 1, **characterized in that** the network server (131) is further programmed to generate statistics about media usage of the remote devices (110, 120) and programmed to transfer at least part of the generation of the statistics to the remote devices (110, 120).

6. The system of any preceding claim, **characterized in that**
the first playlist comprises a list including at least one of music files, video files, and movies files; and
wherein the remote devices (110, 120) include at least one of a personal computer, a laptop computer, a personal digital assistant, a mobile phone, a portable music player, a portable video players, and web servers.

7. A method for sharing playlists among a plurality of user devices (110.120) in communication with a media server (130), comprising:
receiving a first playlist including a first origin identifier identifying a first user device (120) at a remote media server;
receiving an indication that the first playlist is shared with a second user device (110) at the remote media server;
receiving information describing changes to the first playlist from the first user device (120) at the remote media server;
communicating to the second device (110) that the first playlist has been changed, based on the received information;
receiving a second playlist including a second origin identifier identifying the second user device (110) at the remote media server;
receiving a request to analyze the first playlist from the first user device (120) at the remote media server;
transferring the analysis of the first playlist to the first user device (120) including sending the second playlist from the remote media server (130) to the first user device (120) for comparison with the first playlist; and
receiving results of the analysis from the first device (120) at the remote media server (130).

8. The method of claim 7, further **characterized by** comprising generating statistics about media usage of the first and second user devices (110, 120) and transferring at least part of the generation of the statistics to at least one of the first and second remote devices (110, 120).

9. The method of claim 7, **characterized in that**
the first playlist and second playlists comprise lists including at least one of music files, video files, and movies files; and
wherein the first and second remote devices (110, 120) include at least two of a personal computer, a laptop computer, a personal digital assistant, a mobile phone, a portable music player, a portable video players, and a web servers.

10. A method for sharing and updating playlists, comprising:
creating a first playlist including a substantially permanent origin identifier on a first user device (120);
uploading the first playlist to a remote media server (130);
sharing the first playlist with a remote user device (110);
changing the first playlist on the first device (120); and
uploading information describing the changes to the remote server (130);
receiving a second playlist created by the remote user device (110) from the remote media server at the first device (120) in response to a user request to perform analysis based at least in part on the first playlist and remote playlists stored in the remote media server (130);
comparing the first playlist and the second playlist at the first device (120) in response to the request to perform analysis; and
sending results based on the comparing to the media server (130).

11. The method of claim 10, **characterized in that** the request to perform analysis is a request to locate playlists similar to the first playlists and further comprising outputting an indication that the first playlist and the second playlist are similar to at least one of a user of the first user device (120) and the media server (110).

12. The method of claim 10, **characterized in that** the origin identifier comprises information identifying at least one of the first device (120) and a user in a header of the first playlist.

13. The method of claim 10, **characterized in that** the sharing comprises authorizing the remote user device (110) to access the first playlist on the remote media server (130).

14. The method of claim 10, **characterized in that** the changing comprises adding a song to the first playlist.

15. The method of claim 10, **characterized in that** the origin identifier is implicit **in that** the first playlist was created on the first device (120) and comprising sending information identifying the first playlist as created by the first device (120) to the remote server (130).

16. The method of claim 10, **characterized in that** the first playlist comprises a list including at least one of music files, video files, and movies files.

17. The method of claim 10, **characterized in that** at least one of the first device (120) and the second device (110) comprise a personal computer, a laptop computer, a personal digital assistant, a mobile phone, a portable music player, a portable video players, and a web servers.
